# EUROPEAN PATENT SPECIFICATION

(11) **EP 1 659 852 B1**
(45) Date of publication and mention of the grant of the patent: **07.05.2008**
(21) Application number: 04770439.0
(22) Date of filing: 23.08.2004
(51) Int. Cl.: A01C 23/04

(54) **OSCILLATING SPRINKLER WITH A SELF CONTAINED FERTILIZING UNIT AND METHOD OF APPLYING FERTILIZER WITH THE SAME**
OSZILLIERENDER SPRINKLER MIT UNABHÄNGIGER DÜNGEEINHEIT UND VERFAHREN ZUM AUSBRINGEN VON DÜNGER DAMIT
ARROSEUR OSCILLANT A UNITE AUTONOME DE FERTILISANT ET PROCEDE D'APPLICATION DE FERTILISANT AVEC UN TEL ARROSEUR

(30) Priority: 29.08.2003 IL 15766003
(43) Date of publication of application: 31.05.2006
(73) Proprietor: ELGO Irrigation Ltd., 42160 Natania (IL)
(72) Inventor: ALKALAY, Uri, 40500 Even Yehuda (IL)
(74) Representative: Burbaud, Eric
(86) International application number: PCT/IL2004/000768
(87) International publication number: WO 2005/020663

(56) References cited:
- US-A- 5 096 123
- US-A- 5 549 248
- US-A- 5 816 502

## Description

### Field of the Invention

The present invention relates to the field of sprinkler devices. More particularly, the invention relates to a device and method for selectively applying fertilizer, during operation of an oscillating sprinkler device.

### Background of the Invention

Oscillating sprinklers are widely used for watering a predetermined rectangular area of a lawn. An oscillating sprinkler is placed directly on a selected ground surface to be watered, and comprises a rotatable spray pipe having an array of nozzles. A drive mechanism imparts oscillatory rotary motion to a spray pipe (that is connected to a water source)relative to a sprinkler base, causing the water flowing through the pipe and out of the nozzles to be distributed on the lawn substantially on either side of the pipe. Examples of such sprinklers are disclosed in US Patent No. 5,033,678 and European Patent Application No. 0826427.

Fertilizers are necessary additives to a sprinkler system in order to enhance the capability of soil to support plant growth. Fertilizers are generally mixed together with regular water from the mains before being introduced to a sprinkler system, so that the mixture may be sprayed onto the predetermined surface area.

In the prior art, fertilizers are mixed with the water prior to being admitted to an oscillating sprinkler, and thus a separate mixing means from the sprinkler device is required. The connection of such means to a sprinkler is time consuming. Also, storage area is required for both the sprinkler and the fertilizing apparatus. The increased number of parts results in a greater risk of malfunction. Further, such means can pose a risk of fertilizer flowing back into the mains when the water pressure is cut off, and in some cases may cause damage to the oscillating mechanism of the sprinkler itself.

US-A-5 096 123 discloses a sprinkler in which the water-fertilizer mixing chamber is located before the driving mechanism.

It is an object of the present invention to provide an oscillating sprinkler that is adapted for the delivery of a mixture of water and fertilizer onto a predetermined surface area.

It is an additional object of the present invention to provide an oscillating sprinkler that includes a self contained fertilizing unit.

It is an additional object of the present invention to provide an oscillating sprinkler that is more compact than prior art sprinklers which are connected to fertilizer accessories.

It is an additional object of the present invention to provide an oscillating sprinkler wherein the fertilizer may be speedily and effortlessly isolated from, or recombined with, the water source.

Other objects and advantages of the invention will become apparent as the description proceeds.

### Summary of the Invention

The present invention provides an oscillating sprinkler with the features of claim 1.

As referred to herein, "fertilizer" generally refers to any material, whether solid or liquid, including insecticides, herbicides, pesticides, and the like, or any other additive that may be applied to soil or to a plant growth, e.g. grass, growing in said soil, which is adapted to increase the productivity of said soil in terms of the growth rate of plants or the total amount of plant growth capable of being grown in said soil, or alternatively is used in conjunction with the destruction of plant growth.

The sprinkler is adapted for connection with a suitable water source such that water may be provided to said spray pipe. A one-way valve means is preferably provided for preventing water or fertilizer solution from returning to said water source from said sprinkler.

In one aspect, the spray pipe is adapted for oscillating about at least one axis substantially parallel to the said surface on which it is desired to rest said at least one base.

In one embodiment of the invention, the fertilizing unit comprises at least one fertilizer reservoir for holding fertilizer and a path of fluid communication through which said fertilizer solution is delivered to the interior of the spray pipe from the at least one reservoir. Fertilizer solution may be drawn to said mixing chamber by a venturi apparatus or by air injected into the fertilizer reservoir, thereby inducing the flow of fertilizer solution to the mixing chamber.

In another embodiment, the sprinkler further comprises a first line operatively connected to said at least one-reservoir such that liquid may flow into said at least one reservoir, and preferably, valve means in fluid communication with said first line; an actuator for said valve means; and an inlet to a second line through which said fertilizer solution is delivered to the interior of the spray pipe from the at least one reservoir. The fertilizer solution may be delivered through the second line by the motive force produced during the flow of the liquid from the first line into the at least one reservoir.

In another embodiment of the invention, the fertilizing unit further comprises means for generating a reduced pressure relative to the pressure in the fertilizer reservoir, fertilizer being drawn by said reduced pressure generating means to the mixing chamber. The reduced pressure generating means is a venturi apparatus.

Preferably, the sprinkler further comprises a mixing chamber in which the fertilizer solution formed in said at least one reservoir may be mixed with water admitted to the sprinkler prior to ejection via said nozzles.

In one aspect, the mixing chamber comprises a conduit in which pressurized water discharged from a drive mechanism and flowing within said conduit, together with fertilizer solution flowing within the second line, are mixed. Liquid is diverted from said conduit via a first port formed therein and flows through said first line, and the fertilizer solution is injected into said conduit via a second port formed therein.

When the diverted liquid is the pressurized water discharged from a drive mechanism, the second port is downstream to the first port. When the diverted liquid is fertilizer solution entrained by the pressurized water being diverted from the conduit via said first port and flowing through the first line to said reservoir, the first port is downstream to the second port.

As referred to herein, "upstream" and downstream" directions are relative to the flow of the pressurized liquid discharged from the drive mechanism to the interior of the spray pipe.

In one aspect, the mixing chamber is disposed in the interior of the spray pipe, and therefore affords the sprinkler of the present invention greater compactness than oscillating sprinklers of the prior art.

In another aspect, the mixing chamber is disposed adjacent to a drive mechanism that imparts rotary motion in oscillating fashion to liquid admitted to the sprinkler. The discharge from the mixing chamber may be delivered directly to, or in parallel with, the drive mechanism. Alternatively, the mixing chamber is disposed upstream to the drive mechanism.

In another aspect, the mixing chamber is disposed in the interior of a reservoir.

The valve means is preferably a control valve for regulating the flow of liquid through the first line.

In one embodiment of the invention, a fertilizer reservoir extends substantially throughout the length of the sprinkler. The fertilizer reservoir is provided with a suitable closeable opening for enabling fertilizer to be introduced thereinto and a suitable cap for selectively closing said opening. By providing the fertilizer reservoir with support elements formed on the bottom thereof, the reservoir serves as the at least one base, thereby affording the sprinkler with increased compactness relative to the prior art.

Alternatively, the at least one fertilizer reservoir is fixedly attached to the at least one base of the sprinkler.

Preferably, the first line and second line are-each-formed by a rigid portion and/or a flexible portion.

Preferably, the sprinkler further comprises a filter for preventing the passage of solid particles through the path of fluid communication through which the fertilizer solution is delivered to the interior of the spray pipe.

In one aspect, the filter is disposed at the inlet of the second line.

### Brief Description of the Drawings

In the drawings:
- Fig. 1 is a perspective view of a sprinkler according to a preferred embodiment of the present invention;
- Fig. 2 is a bottom fragmented view of the bottom of the sprinkler of Fig. 1, showing exemplary means by which an adapter is attached to an end support of a spray pipe;
- Fig. 3 is a perspective fragmented view of the bottom of the sprinkler of Fig. 1, showing exemplary means by which an adapter is attached to a fertilizer reservoir;
- Fig. 4 is a perspective fragmented view of a chamber of the sprinkler of Figure 1, in which pressurized water and fertilizer solution are mixed (the spray pipe having been removed from this Figure);
- Fig. 5 is a perspective side view of a sprinkler of Figure 1, with the spray pipe and fertilizer reservoir removed, showing the flow paths within the bleed and suction lines;
- Fig. 6 is a cross-sectional view of the mixing chamber of Fig. 4;
- Fig. 7 is a perspective side view of the sprinkler, with the spray pipe and the sprinkler base are shown as partially removed, showing the discharge from a mixing chamber;
- Fig. 8 is a perspective side view of the sprinkler of Figure 1, with the spray pipe partially removed, showing the control valve and filter;
- Fig. 9 is a perspective view of the control valve actuator and fertilizer reservoir cap of the embodiment of Figure 1;
- Fig. 10 is an inverted side perspective view, showing the control valve and filter of Figure 9 in detail; and
   Fig. 11 is a longitudinal cross-sectional view of the control valve and actuator of the embodiment of Figure 1.

### Detailed Description of Preferred Embodiments

The present invention is a novel oscillating sprinkler device provided with a self containing fertilizing unit with which automatic fertilizing is made possible. During operation of the sprinkler device, fertilizer may be selectively admitted to the water conveyed by the sprinkler device, or alternatively, isolated therefrom, upon the discretion of a user. Further, the concentration of fertilizer in the water that is sprayed by the sprinkler may also be controlled.

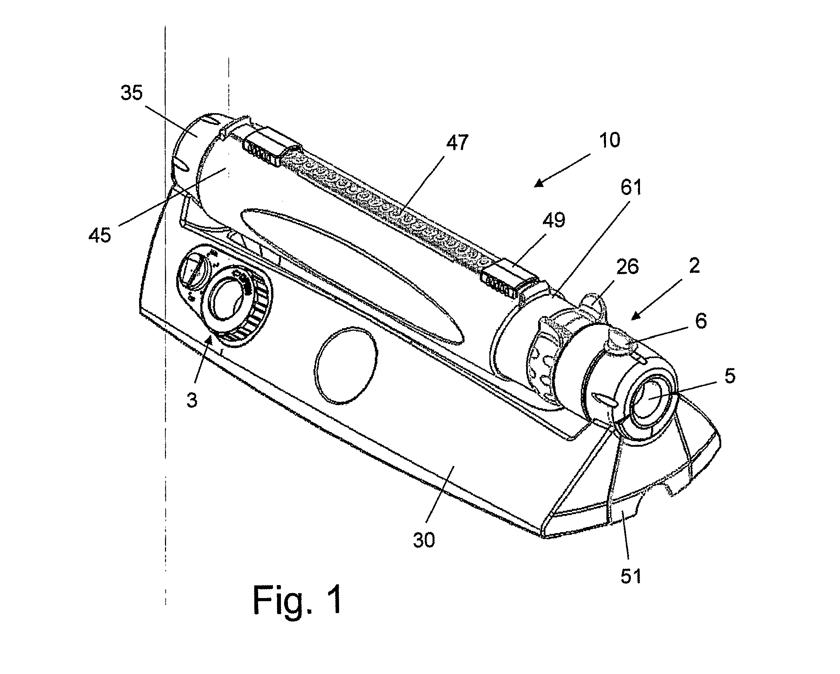

Fig. 1 illustrates a preferred embodiment of a sprinkler device according to the present invention, which is generally designated by numeral 10. Sprinkler device 10 comprises water inlet 5, water conveying unit 2, fertilizing unit for mixing a fertilizer solution with the water conveyed by unit 2 and including fertilizer reservoir 30, which is typically placed on a desired ground surface and is integral with, or attachable to, adapter 51, and oscillatingly rotatable spray pipe 45 for spraying, onto a predetermined surface area, water or water plus fertilizer through nozzles 47 formed along said spray pipe. Spray pipe 45 is welded to drive mechanism housing 61. The driven shaft of the spray pipe is mounted on end supports 35, one of which being visible in this Figure, and rotates about a substantially horizontally disposed longitudinal axis, with a sufficient clearance between the periphery of the spray pipe and fertilizer reservoir 30. In other embodiments, reservoir 30 may be replaced with a plurality of reservoirs that may be optionally interlinked, wherein each such reservoir may comprise a different fertilizer, for example. By sliding nozzle covers 49 over selected nozzles 47, a predetermined spraying pattern and/or area to be sprayed may be established. Sprinkler device 10, together with its self contained fertilizing unit 3, has a more compact configuration than has been known heretofore, thereby reducing the risk of malfunction, reducing the required storage area and simplifying the use thereof.

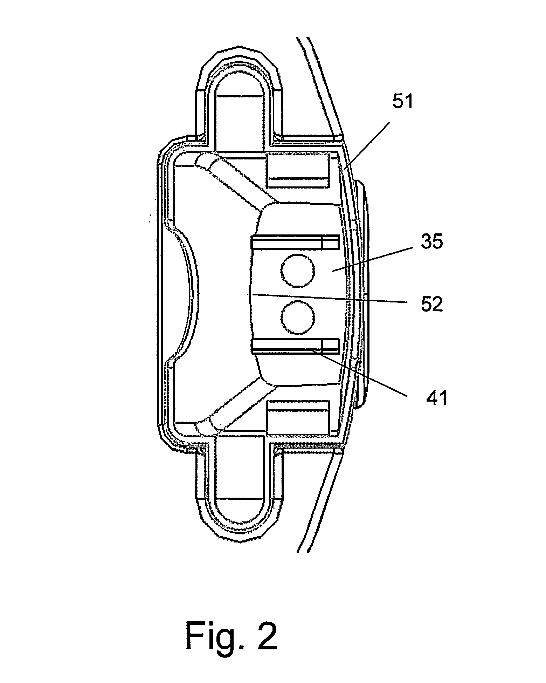

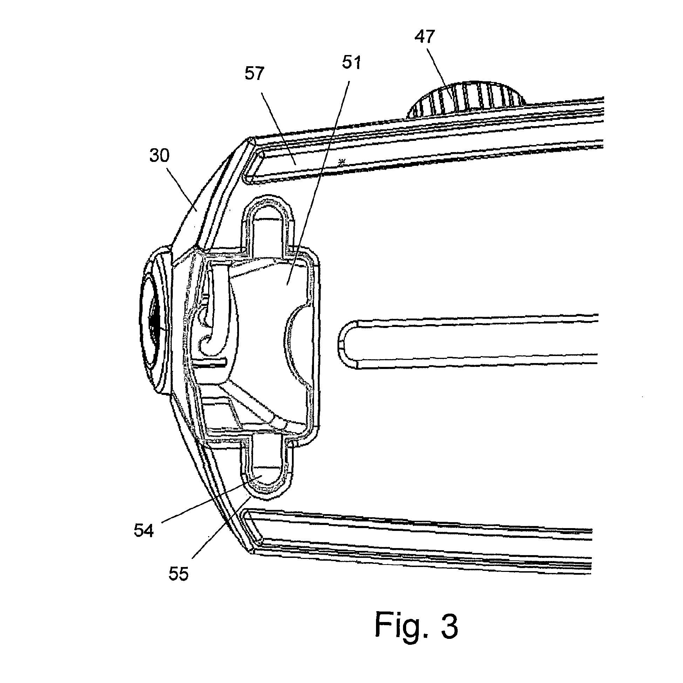

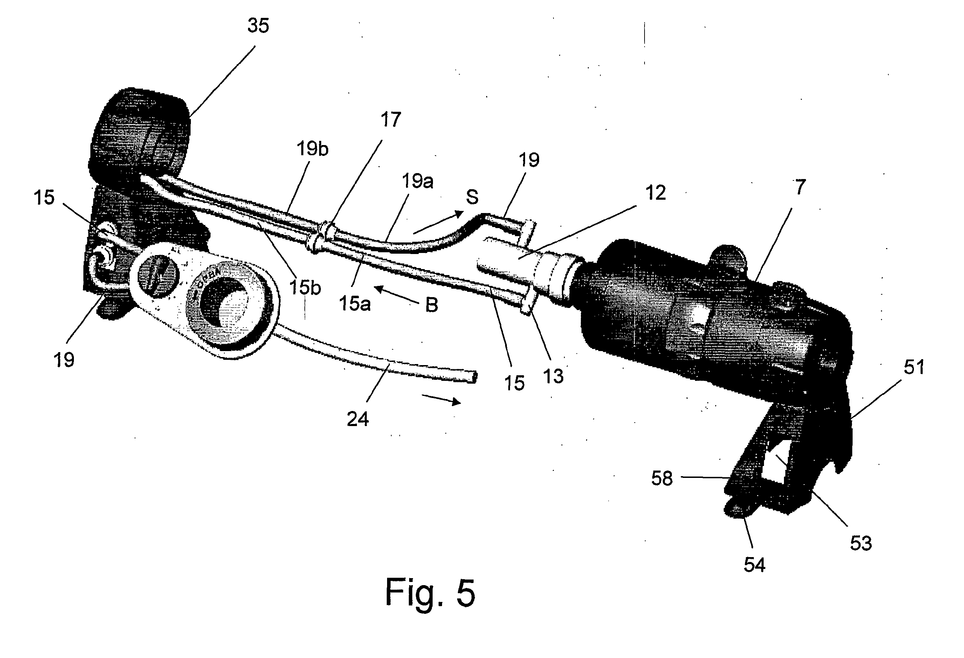

Fig. 5 illustrates the sprinkler device with the fertilizer reservoir removed. An exemplary adapter 51 is shown, and comprises a bottom end that is substantially wider than its upper end. Upper end 52 of base 51 is preferably concave, so that it may couple with the cylindrical end support 35 or casing 7 of the drive mechanism. Upper end 52 may be snapped into position under corresponding end support 35 or casing 7 by means of rectangular elongated elements 41 formed on the underside of end support 35, for example, as shown in Fig. 2, or may be fused or bonded thereto. Rectangular aperture 53, through which hoses of the fertilizing unit pass, as will be described hereinafter, is formed in inwardly disposed wall 58 of the base, as illustrated in Fig. 5. The bottom end of adapter 51 is provided with keys 54, which facilitate engagement with a correspondingly shaped female portion 55 on the bottom end of fertilizer reservoir 30, as shown in Fig. 3. The fertilizer reservoir may be further attached to adapter 51 along wall 58 (not shown).

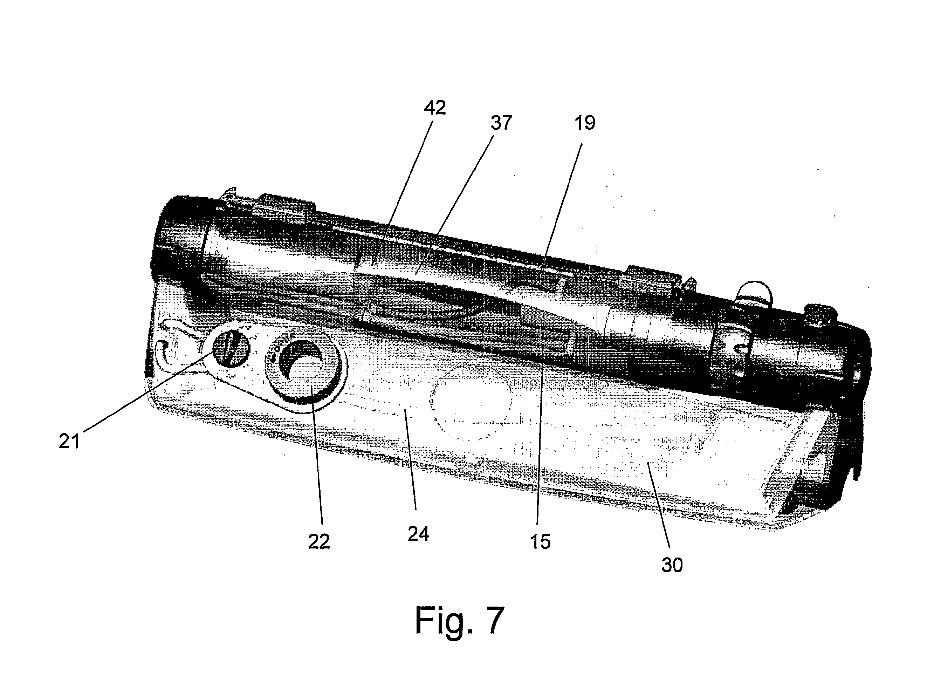

As shown in Figs. 1 and 7, fertilizer reservoir 30 extends throughout the length of the sprinkler device Support elements 57 formed on the bottom of the fertilizer reservoir, which also extend throughout the length of the sprinkler device, provide additional stability thereto. Due to the configuration of reservoir 30, including the provision of support elements 57, the reservoir provides support and stability for the sprinkler device, particularly during operation thereof, and therefore serves as- a base for the sprinkler device. Since fertilizer reservoir 30 is fixedly attached to adapter 51, and adapter 51 is fixedly attached to an end support 35 or to casing 7, the sprinkler device provides the impression of being a singular device with an integral fertilizer reservoir. In fact, the reservoir 30, adapter 51 and at least a part of casing 7 may be optionally formed as an integral unit.

If so desired, adapter 51 may be configured, in order to provide additional support and stability for the sprinkler device, as a supplementary base.

Similarly, the sprinkler device may be provided with an independent base of any desired shape and configuration, while the reservoir, or a plurality of reservoirs, may be fixedly attached to said base, such as to the side, above or below the base.

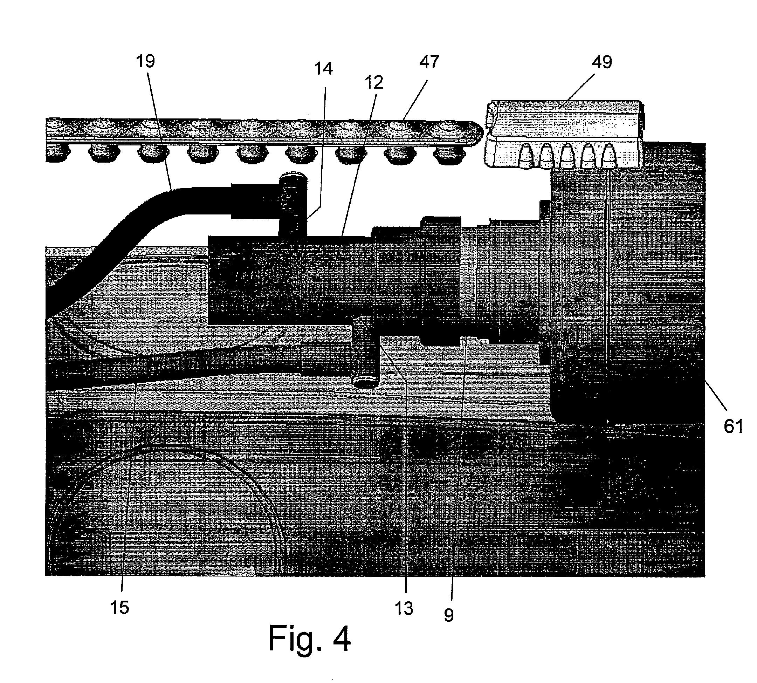

Referring in particular to Figs. 4-6, the compactness of the spray device according to the preferred embodiment is achieved by providing a fertilizer mixing chamber in the interior of the spray pipe, instead of a mixing chamber external to the sprinkler, as known in the prior art, which may result in a significantly larger device thickness than that of the present invention. Conduit 12, through which the water conveyed by the drive mechanism flows, comprises the mixing chamber. Conduit 12 is encircled by the spray pipe, which is represented by the array of nozzles 51 in Fig. 4. One longitudinal end of the spray pipe is mounted on the support 35 that is adjacent to casing 7.

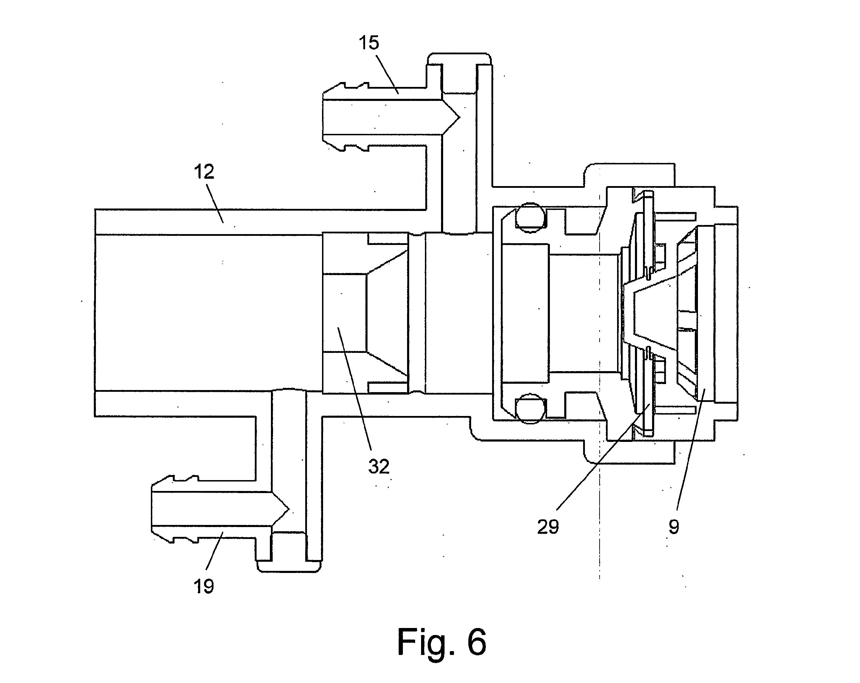

Water conveying unit 2 comprises shutoff valve 6 for water inlet 5, sweep setting assembly 26 for setting the angular displacement of spray pipe 45 (Fig. 1), a drive mechanism which may include a gear train and turbine motor contained within housing 61, or any other suitable arrangement for providing oscillating rotary motion to the spray pipe during flow of water admitted to the sprinkler device, all of which being well known to those skilled in the art and therefore need not be described for brevity. The discharge from the drive mechanism exits non-return valve 9, which comprises a sealing membrane 29. Non-return valve 9 (Fig. 6) prevents contamination of potable water upstream to the sprinkler device by the fertilizer solution flowing through the suction line. As the drive mechanism imparts an oscillatory rotary motion to the water flowing through the water conveying unit, the spray pipe rotates in response to the rotary motion of the pressurized water discharged from the turbine motor. Conduit 12 is connected to the drive mechanism housing 61 by means of an adapter that encases non-return valve 9.

Conduit 12 is typically formed with two ports. The first port 13, through which a portion of the pressurized water is diverted, is on the upstream side of conduit 12. The diverted water flows through bleed line 15, from port 13 to the fertilizer reservoir, as shown by the direction of arrow B.

The second port 14 is provided downstream of a venturi arrangement, which may be in the form of nozzle element 32. The venturi arrangement lowers the static pressure of the water at port 14, providing suction to line 19.

After the diverted water is introduced into the fertilizer reservoir by inlet hose 24 and mixes with the fertilizer introduced into the fertilizer reservoir, or alternatively dilutes the fertilizer, if the fertilizer is in solid form, e.g. fertilizer pellets, the fertilizer solution flows, as shown by the direction of arrow S, from the reservoir to conduit 12 via suction line 19 and second port 14, which is formed downstream to the first port 13. The fertilizer solution therefore may be entrained by the pressurized water within the conduit and delivered to a target location.

In other embodiments, the suction port 14 may be configured to be upstream of the bleed port 13.

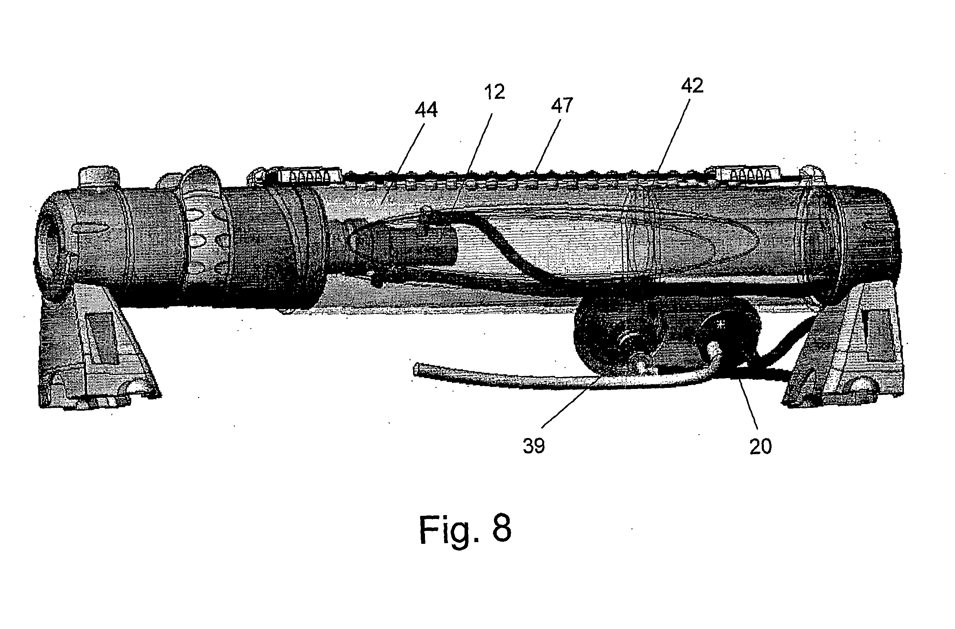

As illustrated in Figs. 7 and 8, stream 37 of fertilizer entrained by, and mixed with, the water pressurized by the water conveying unit is discharged from conduit 12 and is issued from nozzle array 47 after flowing through annular passage 39 formed within the spray pipe. U-shaped retainer 42 urges bleed line 15 and suction line 19 to the periphery of passage 39, so as to minimize any interference with stream 37. Retainer 42 presses on connectors 17 (see Fig. 1), which connect two portions of each line- portions 15a and 15b of the bleed line and portions 19a and 19b of the suction line. Portions 15b and 19b are flexible, to allow for relative motion with respect to end support 35, while portions 15a and 19a proximate to conduit 12 may be rigid, or alternatively, may also be flexible.

Referring particularly to Figs. 1, 9 and 10, in the preferred embodiment of the invention the fertilizing unit 3 includes fertilizer reservoir 30 in which fertilizer is introduced, control valve 20 for isolating, or selectively changing the flow rate of, the water flowing in bleed line 15 from conduit 12, actuator 21 disposed above the control valve, filter 39 disposed beneath reservoir cap 22, and venturi means 32 (Fig. 6) for producing a suction force and drawing fertilizer and/or fertilizer mixed with water from the fertilizer reservoir to conduit 12. Fertilizer may be introduced into the reservoir when cover 22 is removed. Cap 22 may be advantageously provided with a transparent portion by which the depth of the fertilizer within the reservoir, as well as filter 39, is visible. If so desired, the fertilizer may be colored to further indicate when the supply of fertilizer needs to be replenished.

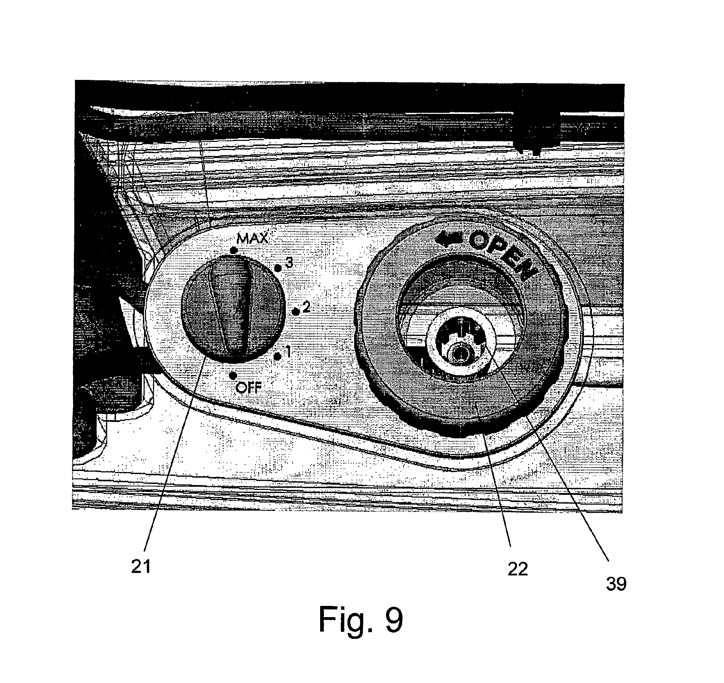

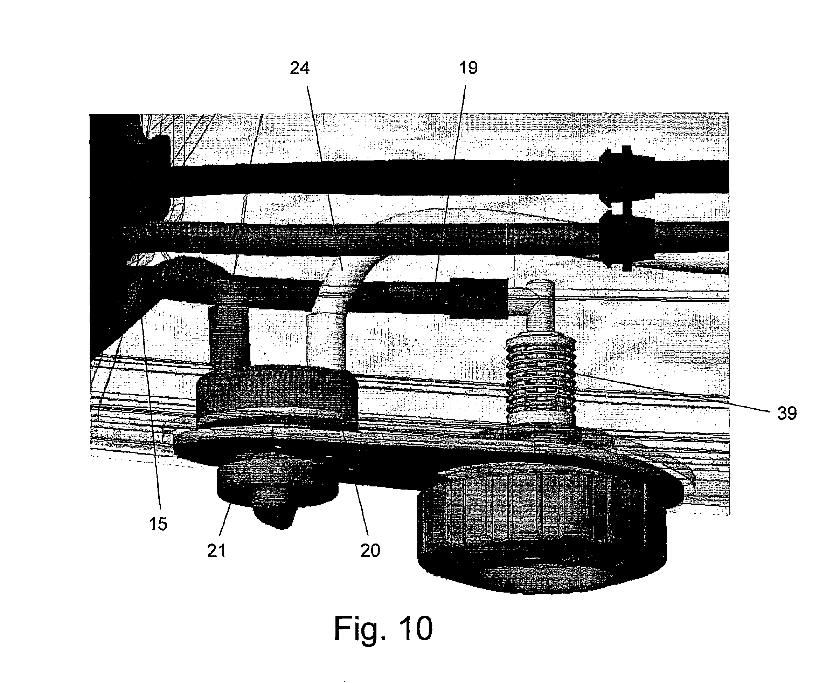

In Fig. 10, valve 20, which may be a rotating control valve, is shown to be in fluid communication with bleed line 15 and inlet hose 24. Upon actuating valve 20 to an open position, such as settings "1," "2," "3," or "MAX" illustrated in Fig. 9, water flows through bleed line 15 and hose 24 into the fertilizer reservoir. Diverted water is discharged from hose 24 and is mixed with the fertilizer previously introduced into the reservoir. When liquid fertilizer is employed, a homogeneous fertilizer solution is produced; due to the turbulence of the water discharged into the reservoir. When solid fertilizer is used, the turbulence of the diverted water assists in dissolving the fertilizer and in subsequently forming a fertilizer solution.

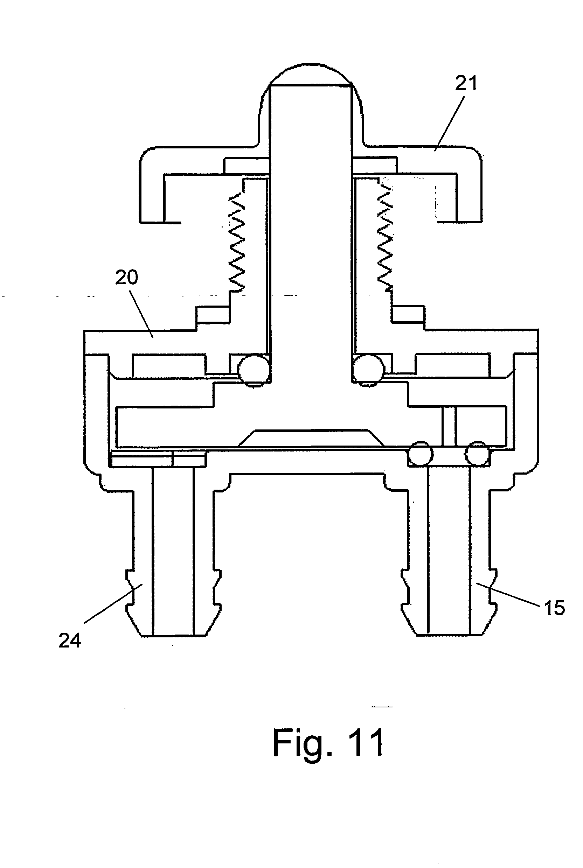

The rate of water influx into the reservoir is controlled by adjusting the opening of the valve, through which diverted water passes, by means of actuator 21. Fig. 11 illustrates control valve 20 in an open position. The rate of water influx into the reservoir, which is dependent upon the flow rate of the water admitted to the sprinkler device, the pressure increase applied by the water conveying unit, the pressure differential caused by nozzle element 32 (Fig. 6) and the flow rate of fertilizer solution within suction line 19, in turn determines a desired fertilizer concentration. Each different type of fertilizer may have a different rate of solubility in water, and each different type of plant growth may require a different fertilizer concentration. Water continues to flow into the reservoir as long as the control valve is in an open position.

Suction line 19 transports fertilizer solution to the mixing chamber. Filter 39 prevents solid contaminants or fertilizer particles from being drawn in the suction line. Since the pressure at venturi apparatus 32 (Fig. 6) is lower than within the reservoir, fertilizer solution is drawn through suction line 19, until being admitted to conduit 12 and being entrained by the pressurized water. Suction line 19 is preferably positioned to be at an intermediate height within reservoir 30. Fertilizer solution will continue to flow through the suction line until the level of the fertilizer solution is lowered below that of the inlet to suction line 19, which may be filter 39 (Fig. 10). When water is readmitted to the reservoir via bleed line 15, a fertilizing cycle resumes, as previously described. If the fertilizer supply is exhausted, cover 22 is simply removed, even during operation of the sprinkler device, and the supply may be replenished. Consequently, fertilizer may be propelled by the sprinkler device to a target location in an automatic, intermittent fashion.

If so desired, valve 20 may be selectively actuated to a closed position, as indicated by the "OFF" setting in Fig. 9, during operation of the sprinkler device, if a certain application requires only a brief fertilizing cycle. Upon actuation of valve 20 to a closed position, only that fertilizer solution lying above the inlet to suction line 19 will be drawn through the suction line by the venturi apparatus and entrained by the pressurized water, whereupon a sprinkling cycle resumes during which water unmixed with fertilizer will be issued from the spray pipe.

In the preferred embodiment, suction from the venturi apparatus 32, and water pressure from the incoming water are both used as motive means for urging fertilizer into the spray pipe 45. However, other embodiments are possible which include only one motive means.

In another embodiment of the invention, fertilizer solution flows through the suction line without use of a venturi apparatus, which is therefore absent. In such an embodiment, the flow of water exiting inlet hose 24 (Fig. 5) constitutes the motive force for the transport of the fertilizer solution. As pressurized water is admitted to the fertilizer reservoir via the bleed line, fertilizer solution is produced and rises within the fertilizer reservoir. When the level of the fertilizer solution rises above the inlet to the suction line, particularly when the fertilizer reservoir is completely filled, fertilizer solution will be driven through the suction line and mixed within the mixing chamber.

In another embodiment of the invention, the venturi apparatus is used as the sole motive means to draw fertilizer or fertilizer solution from the fertilizer reservoir. As fertilizer is removed from the reservoir, the volume may be replenished by water or water mixed with fertilizer, provided from any suitable part of the sprinkler device, or from an external source. Alternatively, the volume within the reservoir may be replenished by a burst of air, which is admitted to the reservoir by a suitable hose and pressure applying means (not shown).

It will be appreciated that fertilizer solution, instead of pure water, may be delivered to the fertilizer reservoir via the bleed line. Said fertilizer solution is diverted from conduit 12 (Fig. 4) at a port downstream from the port into which the suction line feeds. Similarly, the suction line may be fed directly to the drive mechanism, or upstream thereto, whereat fertilizer solution is delivered from the reservoir and mixes with the water admitted to the sprinkler device at the drive mechanism or upstream thereto, respectively.

While some embodiments of the invention have been described by way of illustration, it will be apparent that the invention can be carried into practice with many modifications, variations and adaptations, and with the use of numerous equivalents or alternative solutions that are within the scope of persons skilled in the art without exceeding the scope of the claims.

## Claims

1. An oscillating sprinkler (10) which comprises: (a) at least one base (30); (b) an essentially cylindrical spray pipe (45) rotatable about an essentially horizontal axis in an oscillating fashion with respect to said at least one base (30), said spray pipe being provided with a plurality of nozzles (47) on its outer surface for spraying liquid from its interior; (c) a drive mechanism for causing said rotation; (d) a fertilizer-water mixing chamber for mixing fertilizer solution coming from at least one reservoir with water admitted to the sprinkler, prior to ejection vin said nozzles(47); and (e) a self contained fertilizing unit comprising said at least one fertilizer reservoir for delivering a fertilizer solution from said at least one fertilizer reservoir to said mixing chamber;
**characterized in that** said mixing chamber receives pressurized water from a conduit, and fertilizer solution from a line connected to said at least one reservoir, and discharges a mixed fertilizer-water solution in parallel or downstream of said drive mechanism.

2. The oscillating sprinkler of claim 1, wherein said fertilizer-water mixing chamber is located within the interior of said rotatable spray pipe (45).

3. The oscillating sprinkler of claim 1, wherein said sprinkler (10) is adapted for connection with a suitable water source such that water may be provided to said spray pipe (45).

4. The oscillating sprinkler of claim 3, further comprising suitable one-way valve means for preventing water from returning to said water source from said sprinkler (10).

5. The oscillating sprinkler of claim 1, wherein the fertilizing unit comprises at least one fertilizer reservoir for holding fertilizer and a path of fluid communication through which said fertilizer solution is delivered to the interior of the spray pipe (45) from the at least one reservoir.

6. The oscillating sprinkler of claim 5, further comprising a first line operatively connected to said at least one reservoir such that liquid may flow into said at least one reservoir.

7. The oscillating sprinkler of claim 6, further comprising valve means in fluid communication with said first line; an actuator for said valve means; and an inlet to a second line through which said fertilizer solution is delivered to the interior of the spray pipe from the at least one reservoir.

8. The oscillating sprinkler of claim 1, wherein liquid is diverted from said conduit via a first port formed therein and flows through said first line, and the fertilizer solution is injected into said conduit via a second port formed therein.

9. The oscillating sprinkler of claim 8, wherein the second port is downstream with respect to the first port.

10. The oscillating sprinkler of claim 8, wherein the first port is downstream to the second port, fertilizer solution entrained by the pressurized water being diverted from the conduit via said first port and flowing through the first line to said reservoir.

11. The oscillating sprinkler of claim 1, wherein the mixing chamber is located upstream the drive mechanism.

12. The oscillating sprinkler of claim 1, wherein the mixing chamber is located in parallel with the drive mechanism.

13. The oscillating sprinkler of claim 1, wherein the mixing chamber is disposed downstream to the drive mechanism.

14. The oscillating sprinkler of claim 1, wherein the first line and second line are each formed by a rigid portion and/or a flexible portion.

15. The oscillating sprinkler of claim 5, wherein the fertilizing unit further comprises means for generating a reduced pressure relative to the pressure in the fertilizer reservoir, such that fertilizer may be drawn by said reduced pressure generating means to the mixing chamber.

16. The oscillating sprinkler of claim 15, wherein the reduced pressure generating means is a venturi apparatus.

17. The oscillating sprinkler of claim 6, wherein a second valve means is provided for regulating the flow of liquid through the first line.

18. The oscillating sprinkler of claim 5, wherein, the sprinkler further comprises a filter for preventing the passage of solid particles through the path of fluid communication through which the fertilizer solution is delivered to the interior of the spray pipe.

19. The oscillating sprinkler of claim 18, wherein the filter is disposed at the inlet of the second line.

20. The oscillating sprinkler of claim 5, wherein the at least one fertilizer reservoir is fixedly attached to the at least one base of the sprinkler.

21. The oscillating sprinkler of claim 5, wherein the at least one fertilizer reservoir is the at least one base.

22. The oscillating sprinkler of claim 5, wherein the fertilizer reservoir extends substantially throughout the length of the sprinkler.

23. The oscillating sprinkler of claim 5, wherein the fertilizer reservoir is provided with support elements formed on the bottom thereof.

24. The oscillating sprinkler of claim 5, wherein the fertilizer reservoir is provided with a suitable closeable opening for enabling fertilizer to be introduced thereinto.

25. The oscillating sprinkler of claim 24, further comprising a suitable cap for selectively closing said opening.

## Patentansprüche

1. Oszillierender Sprenger (10), umfassend: (a) wenigstens eine Basis (30); (b) ein im Wesentlichen zylindrisches Sprührohr (45), welches bezüglich der wenigstens einen Basis (30) in oszillierender Art und Weise um eine im Wesentlichen horizontale Achse drehbar ist, wobei das Sprührohr auf seiner Außenfläche mit einer Mehrzahl von Düsen (47) versehen ist, um aus seinem Innenraum Flüssigkeit zu versprühen; (c) einen Antriebsmechanismus zum Herbeiführen der Drehung; (d) eine Dünger-Wasser-Mischkammer, um eine aus wenigstens einem Speicher kommende Düngerlösung vor dem Ausstoß mittels der Düsen (47) mit zum Sprenger zugeführtem Wasser zu mischen; und (e) eine den wenigstens einen Düngerspeicher umfassende, in sich geschlossene Düngereinheit, um eine Düngerlösung von dem wenigstens einen Düngerspeicher zu der Mischkammer zuzuführen;
**dadurch gekennzeichnet, dass** die Mischkammer von einem Kanal unter Druck stehendes Wasser und von einer mit dem wenigstens einen Speicher verbundenen Leitung Düngerlösung empfängt und parallel zum Antriebsmechanismus oder stromabwärts desselben eine gemischte Dünger-Wasser-Lösung abgibt.

2. Oszillierender Sprenger gemäß Anspruch 1, bei welchem sich die Dünger-Wasser-Mischkammer im Innern des drehbaren Sprührohrs (45) befindet.

3. Oszillierender Sprenger gemäß Anspruch 1, bei welchem der Sprenger (10) dazu angepasst ist, mit einer geeigneten Wasserquelle derart verbunden zu werden, dass das Wasser zum Sprührohr (45) zugeführt werden kann.

4. Oszillierender Sprenger gemäß Anspruch 3, der ferner ein geeignetes Einwegventil umfasst, um zu verhindern, dass Wasser vom Sprenger (10) zu der Wasserquelle zurückkehrt.

5. Oszillierender Sprenger gemäß Anspruch 1, bei welchem die Düngereinheit wenigstens einen Düngerspeicher zum Halten von Dünger und einen Fluidverbindungsweg umfasst, durch welchen die Düngerlösung von dem wenigstens einen Speicher zum Innenraum des Sprührohrs (45) zugeführt wird.

6. Oszillierender Sprenger gemäß Anspruch 5, der ferner eine erste Leitung umfasst, die mit dem wenigstens einen Speicher derart betriebsmäßig verbunden ist, dass Flüssigkeit in den wenigstens einen Speicher strömen kann.

7. Oszillierender Sprenger gemäß Anspruch 6, der ferner mit der ersten Leitung in Fluidverbindung stehende Ventilmittel umfasst; einen Aktuator für die Ventilmittel; und einen Einlass zu einer zweiten Leitung, durch welche die Düngerlösung von dem wenigstens einen Speicher zum Innenraum des Sprührohrs zugeführt wird.

8. Oszillierender Sprenger gemäß Anspruch 1, bei welchem Flüssigkeit von dem Kanal über einen darin ausgebildeten, ersten Anschluss umgeleitet wird und durch die erste Leitung strömt und die Düngerlösung über einen zweiten, in dem Kanal ausgebildeten Anschluss in denselben eingespritzt wird.

9. Oszillierender Sprenger gemäß Anspruch 8, bei welchem der zweite Anschluss bezüglich des ersten Anschlusses stromabwärts angeordnet ist.

10. Oszillierender Sprenger gemäß Anspruch 8, bei welchem sich der erste Anschluss stromabwärts des zweiten Anschlusses befindet, wobei die vom unter Druck stehenden Wasser mitgezogene Düngerlösung von dem Kanal über den ersten Anschluss umgeleitet wird und durch die erste Leitung zum Speicher strömt.

11. Oszillierender Sprenger gemäß Anspruch 1, bei welchem sich die Mischkammer stromaufwärts des Antriebsmechanismus befindet.

12. Oszillierender Sprenger gemäß Anspruch 1, bei welchem die Mischkammer parallel zum Antriebsmechanismus angeordnet ist.

13. Oszillierender Sprenger gemäß Anspruch 1, bei welchem die Mischkammer stromabwärts des Antriebsmechanismus angeordnet ist.

14. Oszillierender Sprenger gemäß Anspruch 1, bei welchem die erste Leitung und die zweite Leitung von einem steifen Abschnitt und/oder einem biegsamen Abschnitt gebildet sind.

15. Oszillierender Sprenger gemäß Anspruch 5, bei welchem die Düngereinheit ferner Mittel umfasst, um einen bezüglich des Drucks im Düngerspeicher verringerten Druck zu erzeugen, so dass der Dünger durch die Mittel zum Erzeugen von verringertem Druck zu der Mischkammer gezogen werden können.

16. Oszillierender Sprenger gemäß Anspruch 15, bei welchem die Mittel zum Erzeugen von verringertem Druck ein Venturigerät sind.

17. Oszillierender Sprenger gemäß Anspruch 6, bei welchem zweite Ventilmittel vorgesehen sind, um den Flüssigkeitsstrom durch die erste Leitung zu regulieren.

18. Oszillierender Sprenger gemäß Anspruch 5, bei welchem der Sprenger ferner einen Filter umfasst, um den Durchtritt von festen Partikeln durch den Fluidverbindungsweg zu verhindern, durch welchen die Düngerlösung zum Innenraum des Sprührohrs zugeführt wird.

19. Oszillierender Sprenger gemäß Anspruch 18, bei welchem der Filter am Einlass der zweiten Leitung angeordnet ist,

20. Oszillierender Sprenger gemäß Anspruch 5, bei welchem der wenigstens eine Düngerspeicher an der wenigstens einen Basis des Sprengers fest befestigt ist.

21. Oszillierender Sprenger gemäß Anspruch 5, bei welchem der wenigstens eine Düngerspeicher die wenigstens eine Basis ist.

22. Oszillierender Sprenger gemäß Anspruch 5, bei welchem sich der Düngerspeicher im Wesentlichen über die ganze Länge des Sprengers erstreckt.

23. Oszillierender Sprenger gemäß Anspruch 5, bei welchem der Düngerspeicher mit Halterungselementen versehen ist, die auf seinem Boden ausgebildet sind.

24. Oszillierender Sprenger gemäß Anspruch 5, bei welchem der Düngerspeicher mit einer geeigneten, verschließbaren Öffnung versehen ist, um das Einführen von Dünger in diesen zu ermöglichen

25. Oszillierender Sprenger gemäß Anspruch 24, der ferner einen geeigneten Deckel zum wahlweisen Verschließen der Öffnung umfasst.

## Revendications

1. Arroseur oscillant (10) qui comprend : (a) au moins une base (30) ; (b) un tuyau de pulvérisation pratiquement cylindrique (45) pouvant tourner autour d'un axe pratiquement horizontal de manière oscillante par rapport à ladite ou auxdites bases (30), ledit tuyau de pulvérisation étant équipé d'une pluralité de buses (47) sur sa surface extérieure permettant de pulvériser un liquide depuis son intérieur ; (c) un mécanisme d'entraînement destiné à provoquer ladite rotation ; (d) une chambre de mélangeage engrais-eau permettant de mélanger une solution d'engrais venant d'au moins un réservoir avec de l'eau introduite dans l'arroseur, avant l'éjection par lesdites buses (47) ; et (e) une unité fertilisante indépendante comprenant au moins un réservoir d'engrais permettant de délivrer une solution d'engrais provenant dudit ou desdits réservoirs d'engrais à ladite chambre de mélangeage ;
**caractérisé par le fait que** ladite chambre de mélangeage reçoit de l'eau sous pression provenant d'une conduite et une solution d'engrais provenant d'une canalisation raccordée audit ou auxdits réservoirs, et qu'elle décharge une solution de mélange engrais-eau en parallèle ou en aval dudit mécanisme d'entraînement.

2. Arroseur oscillant selon la revendication 1, dans lequel ladite chambre de mélangeage engrais-eau se trouve à l'intérieur dudit tuyau de pulvérisation rotatif (45).

3. Arroseur oscillant selon la revendication 1, dans lequel ledit arroseur (10) est adapté pour être raccordé à une source d'eau appropriée de sorte que de l'eau peut être fournie audit tuyau de pulvérisation (45).

4. Arroseur oscillant selon la revendication 3, comprenant en outre un moyen de vanne de non-retour approprié destiné à empêcher l'eau de retourner à ladite source d'eau depuis ledit arroseur (10).

5. Arroseur oscillant selon la revendication 1, dans lequel l'unité fertilisante comprend au moins un réservoir d'engrais destiné à contenir l'engrais et une voie de communication de fluide à travers laquelle ladite solution d'engrais est délivrée à l'intérieur du tuyau de pulvérisation (45) à partir du ou des réservoirs.

6. Arroseur oscillant selon la revendication 5, comprenant en outre une première canalisation fonctionnellement raccordée audit ou auxdits réservoirs de sorte qu'un liquide peut s'écouler dans ledit ou lesdits réservoirs.

7. Arroseur oscillant selon la revendication 6, comprenant en outre un moyen de valve en communication fluidique avec ladite première canalisation ; un actionneur pour ledit moyen de valve ; et une entrée vers une seconde canalisation à travers laquelle ladite solution d'engrais est délivrée vers l'intérieur du tuyau de pulvérisation à partir du ou des réservoirs.

8. Arroseur oscillant selon la revendication 1, dans lequel du liquide est détourné de ladite conduite par l'intermédiaire d'un premier orifice qui y est formé et s'écoule à travers ladite première canalisation, et la solution d'engrais est injectée dans ladite conduite par l'intermédiaire d'un second orifice qui y est formé.

9. Arroseur oscillant selon la revendication 8, dans lequel le second orifice est en aval par rapport au premier orifice.

10. Arroseur oscillant selon la revendication 8, dans lequel le premier orifice est en aval par rapport au second orifice, la solution d'engrais entraînée par l'eau sous pression étant détournée de la conduite par l'intermédiaire dudit premier orifice et s'écoulant à travers la première canalisation vers ledit réservoir.

11. Arroseur oscillant selon la revendication 1, dans lequel la chambre de mélangeage est située en amont du mécanisme d'entraînement.

12. Arroseur oscillant selon la revendication 1, dans lequel la chambre de mélangeage est située en parallèle avec le mécanisme d'entraînement.

13. Arroseur oscillant selon la revendication 1, dans lequel la chambre de mélangeage est située en aval du mécanisme d'entraînement.

14. Arroseur oscillant selon la revendication 1, dans lequel la première canalisation et la seconde canalisation sont formées chacune d'une partie rigide et/ou d'une partie souple.

15. Arroseur oscillant selon la revendication 5, dans lequel l'unité fertilisante comprend en outre un moyen destiné à générer une pression réduite par rapport à la pression dans le réservoir d'engrais, de sorte que l'engrais peut être soutiré par ledit moyen de génération d'une pression réduite vers la chambre de mélangeage.

16. Arroseur oscillant selon la revendication 15, dans lequel le moyen de génération d'une pression réduite est un appareil venturi.

17. Arroseur oscillant selon la revendication 6, dans lequel un second moyen de valve est installé pour réguler l'écoulement de liquide à travers la première canalisation.

18. Arroseur oscillant selon la revendication 5, dans lequel l'arroseur comprend en outre un filtre destiné à interdire le passage de particules solides à travers la voie de communication de fluide à travers laquelle la solution d'engrais est délivrée vers l'intérieur du tuyau de pulvérisation.

19. Arroseur oscillant selon la revendication 18, dans lequel le filtre est disposé à l'entrée de la seconde canalisation.

20. Arroseur oscillant selon la revendication 5, dans lequel le ou les réservoirs d'engrais sont attachés de manière fixe à la ou les bases de l'arroseur.

21. Arroseur oscillant selon la revendication 5, dans lequel le ou les réservoirs d'engrais sont la ou les bases.

22. Arroseur oscillant selon la revendication 5, dans lequel le réservoir d'engrais s'étend dans pratiquement toute la longueur de l'arroseur.

23. Arroseur oscillant selon la revendication 5, dans lequel le réservoir d'engrais est muni d'éléments de soutien formés sur le fond de celui-ci.

24. Arroseur oscillant selon la revendication 5, dans lequel le réservoir d'engrais est muni d'une ouverture obturable appropriée destinée à permettre d'y introduire de l'engrais.

25. Arroseur oscillant selon la revendication 24, comprenant en outre un couvercle approprié destiné à fermer sélectivement ladite ouverture.
